# EUROPEAN PATENT APPLICATION

(11) **EP 2 555 583 A2**
(43) Date of publication of application: **06.02.2013**
(21) Application number: 11185919.5
(22) Date of filing: 20.10.2011
(51) Int. Cl.: H04W 84/00

(54) **Communication system between motor vehicles located in a column formation**

(30) Priority: 30.07.2011 DE 102011109017
(71) Applicant: Johnson Controls Automotive Electronics GmbH, 75196 Remchingen (DE)
(72) Inventor: Parvov, Ivan Hristov, 1343 Sofia (BG)
(74) Representative: Liedtke, Markus

(57) **Abstract**

The invention relates to a system for a mobile communication between vehicles (1.1 to 1.n) in a column of vehicles (1.1 to 1.n), comprising:
- a plurality of radio communication units (3) wherein each of them is arranged in one of the vehicles (1.1 to 1.n),
- at least one base station (4) with which all radio communication units (3) are connectable via a radio link to perform a communication interlocking in such a manner, that passengers in different vehicles (1.1 to 1.n) communicate with each other.

## Description

The invention relates to a system and a method for a mobile communication between motor vehicles in a column of vehicles.

During a travel of vehicles in a group, e.g. in a column of vehicles or in a convoy, the passengers of the vehicles usually communicate with each other in a rest stop. Alternatively, the passengers communicate with each other via usual mobile phones.

DE 10 2007 045 519 A1 discloses a communication device for providing communication between vehicles, i.e. cars, wherein the communication device has a wireless data communication interface for performing communication of messages with other vehicles, and a unit transmitting and receiving messages over a server.

It is an object of the present invention to provide an improved communication system between vehicles in a column of vehicles.

It is a further object of the present invention to provide an improved method for a mobile communication between motor vehicles in a column of vehicles.

The object is achieved by a system for a mobile communication between motor vehicles according to claim 1 and by a method according to claim 11.

Preferred embodiments of the invention are given in the dependent claims.

According to the invention, a system for a mobile communication between motor vehicles in a column of vehicles comprises a plurality of radio communication units, wherein each of them is arranged in one of the motor vehicles, and at least one base station, with which all radio communication units are connectable via a radio link to perform a communication interlocking in such a manner, that passengers in different vehicles communicate with each other. Such a communication system allows an enjoyable and entertaining travel.

In a preferred embodiment, all vehicles in the column of vehicles may be shown in an optical output unit, e.g. on a display unit of a navigation system in a respective vehicle. Thereby, passenger as well as the driver of the respective vehicle is informed about the position of its own vehicle and of the other vehicles in the column of vehicles.

Furthermore, a usual mobile phone may be used as radio communication unit or as a part of a radio communication unit. Alternatively, the radio communication unit may be adapted to provide a communication interlocking via internet based telephony, so called Voice-over-IP telephony.

In a possible embodiment, the base station is a central stationary unit. In particular, at least one stationary unit, preferably a plurality of stationary units, is positioned along roads, e.g. highways, to provide communication interlocking between vehicles which travel along the road.

Additionally or alternatively, the base station may be integrated in one or in each radio communication unit. Such an integrated design allows a communication interlocking on side roads which are not located in the transmission/reception range of a stationary base station.

According to a further embodiment, the radio communication unit is adapted to connect to a navigation system. In particular, each radio communication unit, which is connected to a navigation system, is adapted to connect to an optical output unit in the respective vehicle to control positions of the vehicles in the column of vehicles. Such a connection between the radio communication unit and the navigation system ensures a simple monitoring of its own position in the column of vehicles with respect to the position of other vehicles.

According to a further embodiment, each radio communication unit, which is connected to a navigation system, is adapted to connect to a control unit in the respective vehicle to automatically control the respective vehicle and follow a leading vehicle in the column of vehicles. Preferably, the control unit is adapted to control and maintain the distances and directions between the vehicles by radar devices. Such a connection between the radio communication unit and the navigation system ensures a safe and convenient travel of a plurality of vehicles in a column or in a convoy.

As another embodiment, the radio communication unit is adapted to connect to a tactile, acoustic and/or optical output unit, e.g. a display unit, a touch screen, an entertainment system, a mobile phone. Such possible connections to outer vehicle units allow further monitoring and/or control functions during travelling in a column of vehicles.

Preferably, the communication interlocking between the radio communication units and the base station is provided as a digital telephony service using global internet protocol networks, e.g. as a so called Voice over Internet Protocol telephony with access to the internet (Voice over IP, VoIP).

To identify passengers and/or vehicles which travel in the column or in the convoy, the base station comprises a memory in which passengers and/or vehicles are stored as roaming subscribers.

Furthermore, for selecting one of the roaming subscribers to perform an individual interconnection, e.g. a vehicle-to-vehicle communication, between the radio communication units of respective vehicles in the column of vehicles and/or to perform a broadcast connection to all other communication units in the column of vehicles, each radio communication unit comprises a human-machine interface, e.g. control buttons. Thus, wrong communication interlocking between passengers and/or vehicles can be prevented.

With regard to the method for a mobile communication between motor vehicles in a column of vehicles, a wireless communication interlocking is provided between respective vehicles in the column of vehicles in such a manner, that passengers in different vehicles communicate with each other, and/or that the respective vehicles are controlled to automatically follow a leading vehicle while maintaining distances and directions between the vehicles in the column of vehicles. This allows a column of vehicles with a leading vehicle and at least one succeeding vehicle to automatically follow the leading vehicle, while vehicles, in particular control units of the vehicles, communicate with each other by the wireless communication interlocking between the vehicles.

Preferably, passengers and/or vehicles in the controlled column of vehicles are grouped to a vehicle group and stored in a memory of a base station.

In order to perform an individual interconnection to another radio communication unit of one of the vehicles in the column of vehicles and/or to perform a broadcast connection to all other communication units in the column of vehicles each passenger and/or vehicle is applied for the vehicle group by a simple identification code, e.g. name of passengers and/or license number.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

The present invention will become more fully understood from the detailed description given hereinbelow and the accompanying drawings which are given by way of illustration only, and thus, are not limitive of the present invention, and wherein:

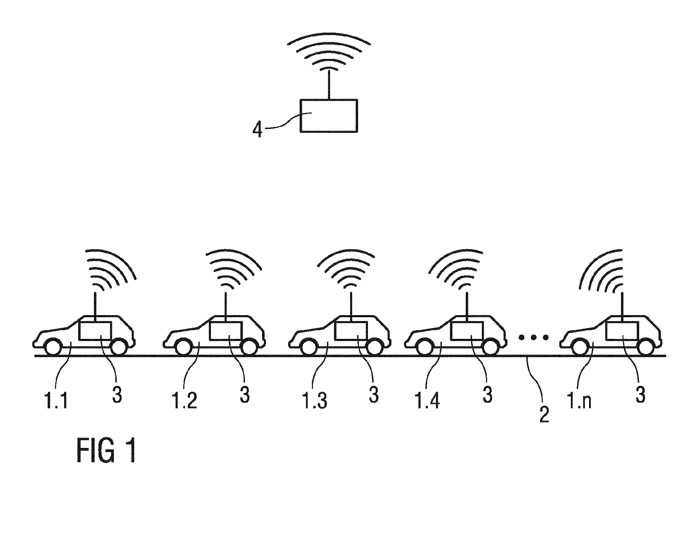

- Fig. 1: Shows schematically a plurality of vehicles in a column of vehicles, which are connected via a radio link to perform a communication interlocking.

The sole figure 1 shows a plurality of motor vehicles 1.1 to 1.n, which travel in a common direction in a column of vehicles 1.1 to 1.n on a usual road 2, e.g. on a highway with a plurality of lanes or on a road with a single lane.

The vehicles 1.1 to 1.n are typical passenger cars and/or busses and/or commercial cars which transport a plurality of passengers. Usually, the passengers of different vehicles 1.1 to 1.n communicate with each other in a rest period at a parking ground or at a motorway service area. According to the invention, each vehicle 1.1 to 1.n comprises a radio communication unit 3, which is connectable with a base station 4 via a usual radio link to perform a communication interlocking in such a manner, that passengers in different vehicles 1.1 to 1.n communicate with each other.

The base station 4 may be designed as a stationary base station, as shown in figure 1. In an alternative embodiment, the base station 4 may be integrated into each radio communication unit 3 (not shown).

To provide a bi-directional wireless communication as a communicating interlocking between the radio communication units 3 and the base station 4, the radio communication unit 3 may be connectable with a usual mobile phone. Alternatively, a usual mobile phone may be integrated into the radio communication unit 3.

In a further alternative embodiment, the bi-directional wireless communication between the radio communication unit 3 and the base station 4 is provided as a digital telephony service using global internet protocol networks, e.g. Voice over Internet Protocol telephony.

Preferably, the radio communication unit 3 is adapted to connect with a tactile, acoustic and/or optical output unit, e.g. a display unit, a touch screen, an entertainment system. Therefore, the radio communication unit 3 comprises a human-machine interface, e.g. control buttons and/or loud speakers, for recording and reproduction of acoustic information.

In a further embodiment, the radio communication unit 3 is adapted to connect with a usual navigation system.

To perform a communication interlocking between the vehicles 1.1 to 1.n in the column of vehicles 1.1 to 1.n, each driver and passengers of the vehicles 1.1 to 1.n and/or the vehicles 1.1 to 1.n are grouped to a vehicle group of the column of vehicles 1.1 to 1.n. Thereunto, each driver, passenger and/or vehicle 1.1 to 1.n has to apply to a common communicating group at the base station 4 with a common identification code, e.g. a group name, by its own identification, e.g. a vehicle name, driver's name or passenger's name or vehicle license number, as roaming subscribers in the common communication group.

Information about the applied roaming subscribers is stored in a memory of the base station 4. The base station 4 transmits the information about the applied roaming subscribers of the common communication group to the other roaming subscribers before and/or during travelling in the column of vehicles 1.1 to 1.n. Each roaming subscriber of the common communication group may confirm or reject one or more than one of the other applied roaming subscribers.

To perform an individual interconnection to another vehicle 1.2 to 1.n, the driver or a passenger of the vehicle 1.1 may connect the respective radio communication units 3 by pressing or operating a control or connecting button, e.g. a button of an entertainment system, to select the other vehicle 1.2 to 1.n from the common communication group as a roaming subscriber. In particular, the vehicles 1.1 and 1.2 are directly connected with each other via a bi-directional wireless connection.

In an alternative operating of the radio communication unit 3 by selecting a respective broadcast function or operating a broadcast button, the driver or a passenger of the vehicle 1.1 may connect its own vehicle 1.1, in particular the radio communication unit 3, to all other communication units 3 of the other vehicles 1.2 to 1.n in the common communication group for a broadcast connection. Thereto, all vehicles 1.1 to 1.n are connectable with each other by a bi-directional wireless connection.

When a bi-directional wireless connection is established between at least two vehicles 1.1 and 1.2, all noises, preferably all conversations, in the interior of the vehicle 1.1 are recorded by the respective radio communication unit 3 and are transmitted to the other linked radio communication unit 3 of the other vehicle 1.2, in which interior the conversations are reproduced.

Thus, all passengers of all applied vehicles 1.1 to 1.n may communicate with each other in any individual interconnections and/or in any broadcast connections during travelling in the column of vehicles 1.1 to 1.n.

According to a further preferable embodiment, when the radio communication units 3 of the vehicles 1.1 to 1.n of a column are connected to a navigation system, all vehicles 1.1 to 1.n of this respective column may be shown on a display unit of an in-vehicle navigation system. Thus, the driver and/or the passenger may monitor and control the position of its own vehicle 1.1 to 1.n relative to the positions of the other vehicles 1.1 to 1.n and/or the positions of other vehicles 1.1 to 1.n.

Furthermore, one of the applied vehicle 1.1 to 1.n may be selected as a leading vehicle 1.1, which the other applied vehicles 1.2 to 1.n automatically follow by controlling and maintaining distances and direction via the communication interlocking between the radio communication units 3 and respective control units, e.g. driver-assistance system, of the vehicles 1.1 to 1.n.

### List of references

- 1.1 to 1.n: vehicle
- 2: road
- 3: radio communication unit
- 4: base station

## Claims

1. System for a mobile communication between vehicles (1.1 to 1.n) in a column of vehicles (1.1 to 1.n), comprising:
- a plurality of radio communication units (3) wherein each of them is arranged in one of the vehicles (1.1 to 1.n),
- at least one base station (4) with which all radio communication units (3) are connectable via a radio link to perform a communication interlocking in such a manner, that passengers in different vehicles (1.1 to 1.n) communicate with each other.

2. System according to claim 1, wherein the base station (4) is a central stationary unit.

3. System according to claim 1, wherein the base station (4) is integrated in one or in each radio communication unit (3).

4. System according to one of the preceding claims, wherein the radio communication unit (3) is adapted to connect with a navigation system.

5. System according to one of the preceding claims, wherein each radio communication unit (3), which is connected with a navigation system, is adapted to connect with an optical output unit in the respective vehicle (1.1 to 1.n) to control positions of the vehicles (1.1 to 1.n) in the column of vehicles (1.1 to 1.n).

6. System according to one of the preceding claims, wherein each radio communication unit (3), which is connected with a navigation system, is adapted to connect with a control unit in the respective vehicle (1.2 to 1.n) to automatically control the respective vehicle (1.2 to 1.n) and follow a leading vehicle (1.1) in the column of vehicles (1.1 to 1.n).

7. System according to one of the preceding claims, wherein the radio communication unit (3) is adapted to connect with a tactile, acoustic and/or optical output unit, e.g. a display unit, a touch screen, an entertainment system, a mobile phone.

8. System according to one of the preceding claims, wherein the communication interlocking between the radio communication units (3) and the base station (4) is provided as a digital telephony service using global internet protocol networks.

9. System according to one of the preceding claims, wherein the base station (4) comprises a memory in which passengers and/or vehicles are stored as roaming subscribers.

10. System according to claim 9, wherein each radio communication unit (3) comprises a human-machine interface for selecting one of the roaming subscribers to perform an individual interconnection between the radio communication units (3) of the respective vehicles (1.1 to 1.n) in the column of vehicles (1.1 to 1.n) and/or a broadcast connection to all other communication units (3) in the column of vehicles (1.1 to 1.n).

11. Method for a mobile communication between vehicles (1.1 to 1.n) in a column of vehicles (1.1 to 1.n), wherein a wireless communication interlocking is provided between respective vehicles (1.1 to 1.n) in the column of vehicles (1.1 to 1.n) in such a manner, that passengers in different vehicles (1.1 to 1.n) communicate with each other and/or that the respective vehicles (1.2 to 1.n) are controlled to automatically follow a leading vehicle (1.1) while maintaining distances and directions between the vehicles (1.1 to 1.n) in the column of vehicles (1.1 to 1.n).

12. Method according to claim 11, wherein passengers and/or vehicles (1.1 to 1.n) in the column of vehicles (1.1 to 1.n) are grouped to a vehicle group of the column of vehicles (1.1 to 1.n) and stored in a memory of a base station (4).

13. Method according to claim 12, wherein in order to perform an individual interconnection to another radio communication unit (3) of one of the vehicles (1.1 to 1.n) in the column of vehicles (1.1 to 1.n) and/or a broadcast connection to all other communication units (3) in the column of vehicles (1.1 to 1.n) each passenger and/or vehicle (1.1 to 1.n) is applied for the vehicle group.
